# EUROPEAN PATENT APPLICATION

(11) **EP 1 411 329 A2**
(43) Date of publication of application: **21.04.2004**
(21) Application number: 03256266.2
(22) Date of filing: 03.10.2003
(51) Int. Cl.: G01F 15/075, G01D 4/00

(54) **Water metering system**

(30) Priority: 15.10.2002 US 272392
(71) Applicant: Smith, Wade W., Skillman, New Jersey 08558 (US); Saar, David A., Titusville, New Jersey 08560 (US)
(72) Inventor: Smith, Wade W., Skillman, New Jersey 08558 (US); Saar, David A., Titusville, New Jersey 08560 (US)
(74) Representative: Warren, Anthony Robert

(57) **Abstract**

A system is disclosed for defining a cost for water usage in a unit (10) of a multi unit building such as an apartment or commercial building. The unit (10) may include a water discharge device (12/1) having hot and cold water lines (14, 16), such as a sink, tub/shower, and a water discharge device (12/2) having a single water line (18)such as a toilet. The system may also include a device, such as a heating/cooling device (N), which is connected to a closed loop water supply pipe.
Monitor means (17) is associated with each supply pipe to determine the commencement of flow through the monitor means, the stoppage of such flow indicating the conclusion of an event, and the duration of the flow. The flow duration and flow events for each monitor means (17) are accumulated and are multiplied by a defined cost per unit flow duration/flow events for that monitor means to define a cost for the use of the water.

## Description

The present invention relates to water submetering systems which are used in commercial buildings or apartment houses or the like where a number of tenants use supplied water resources.

It is believed that when a resource is metered, and the consumer of the metered resource must pay for consumption, use of the resource will decrease. To meter the use of water in an apartment unit, it is necessary to meter water flow through all of the discharge pipes. Individual meters can be located in the pipes which supply a toilet, sink, tub or shower. U.S. Patent Nos. 5,838,258 and 6,121,100 disclose such a system.

Prior systems have had complexities that increase cost and decrease their acceptability.

It is accordingly an object of the present invention to provide a simplified system to reduce costs and enhance acceptability.

According to one aspect of the present invention, there is provided a system for defining a cost for water usage in a unit of a multi-unit building, as defined in claim 1.

According to another aspect of the present invention there is provided a system for defining a cost for water usage in a unit of a multi-unit building, as defined in claim 4.

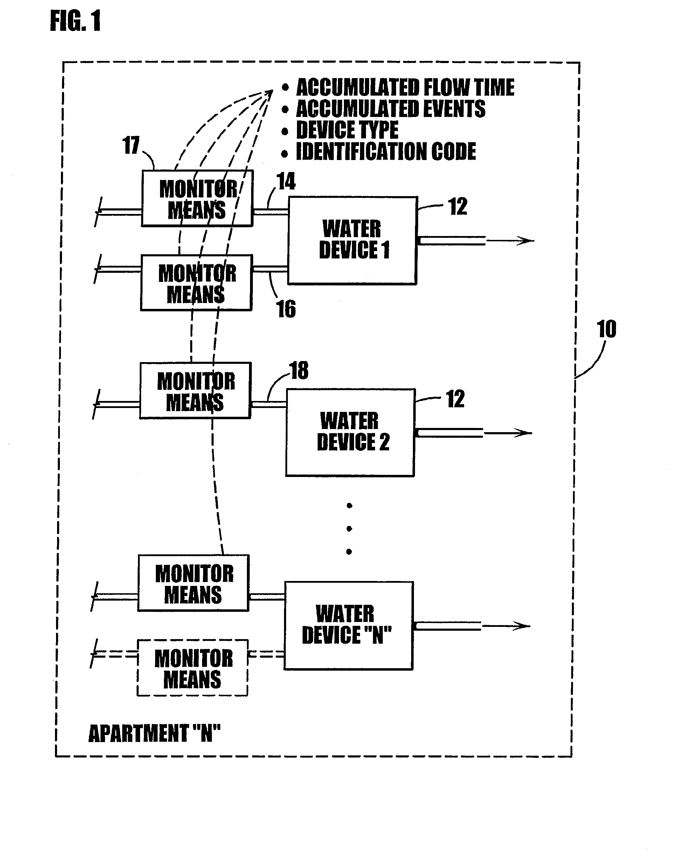

The accompanying drawings illustrate a presently preferred embodiment incorporating the principles of the invention, in which:-
Figure 1 is a schematic illustration of an apartment unit having a number of water devices;
Figure 2 is a logic diagram for the processor which a part of a monitor means shown in Figure 1;
Figure 3 is a schematic illustration of Secondary Processing Means which will receive data from the monitor means shown in Figure 1; and
Figure 4 is a schematic illustration of a Host Computer performing an alternate method of computing the cost of water usage.

An apartment 10 (or a unit in a commercial building) normally has a number of Water Devices 12. Water Device 1 could be a sink such as a kitchen sink or a bathroom sink or a tub/shower which discharges water and which have separate hot 14 and cold 16 water lines on which a Monitor Means 17 could be mounted. Water Device 2 could be a toilet, for example, which discharges water and which has only one water line 18, or a sink/tub where metering is possible following the merger of the hot and cold water lines. An apartment may also have any number of additional Water Devices ("N") such as a closed loop hot water heater/cooler, and each additional device may have the need for either one or two Monitor Means.

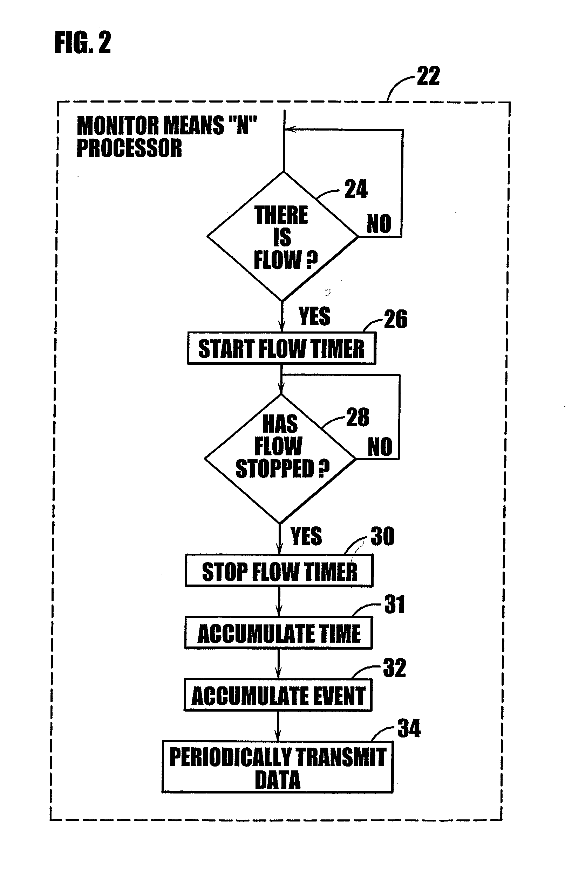

This Monitor Means may be of the type disclosed in U.S. Patent No. 5,969,267 wherein an impeller located within the flow stream rotates with flow and a target on the impeller is monitored by a sensor which inputs sensing information into a processor. The Monitor Means could also be of a type which could determine flow without being located within the pipe. Referring to Figure 2, the Monitor Means "N" has a processor 22 that can receive such data and determine whether "There Is Flow?" at 24. This would be set for a minimum flow level that would be indicative of use rather than indicative of a maintenance issue such as a leak. When flow is determined, the processor will "Start Flow Timer" at 26 so that the time of flow will be timed. The flow will continue to be timed while the query "Has Flow Stopped" at 28 is answered by the processor in the negative but when the query is answered in the affirmative, the processor will "Stop Flow Timer" at 30. The processor will then "Accumulate Time" at 31 by adding the measured time to an accumulator and then "Accumulate Event" at 32 by adding the event to a running total. The processor "Periodically Transmits Data" at 34 which would include the event total, and the accumulated time, along with additional information which might include the type of device, whether the water is hot or cold, whether water is discharged, and a location code (Figure 2). As shown the transmission is by RF transmitter, but alternate technologies could be used such as phone or other lines, radio or other means.

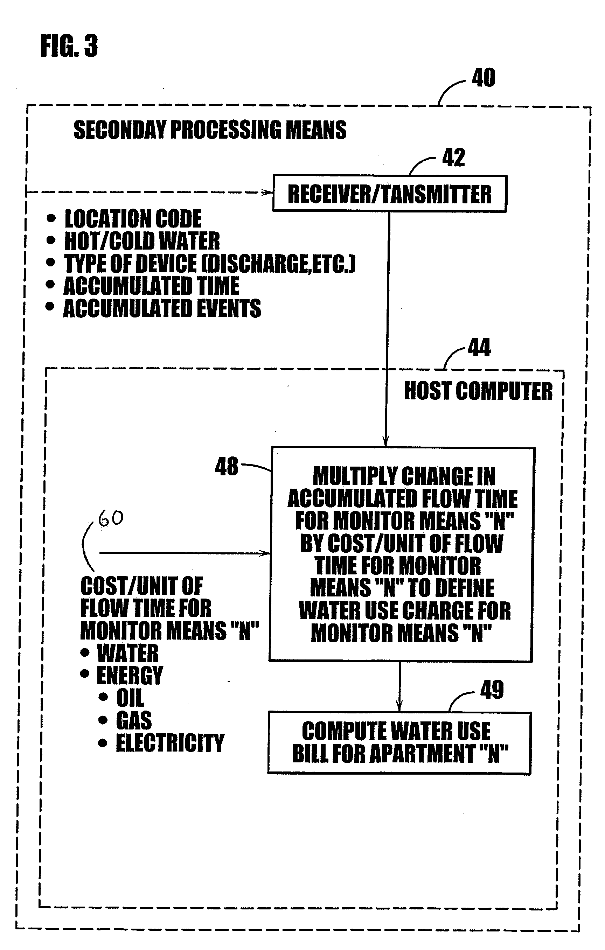

Figure 3 illustrates Secondary Processing Means 40 which might include a Receiver/Retransmitter 42 within the apartment house for periodically receiving the transmitted data (Location Code, Hot/Cold Water, Type of Device (Discharge, etc.), Accumulated Time, Accumulated Events, for example) for a number of identified Monitor Means within the apartment house, and periodically retransmitting this data to a Host Computer 44.

The Host Computer 44 will "Multiply Change In Accumulated Flow Time For Monitor Means "N" By Cost/Unit Of Flow Time For Monitor Means "N" To Define Water Use Charge For Monitor Means "N"" at 48. The Cost/Unit Of Flow Time For Monitor Means "N", which may include a number of costs including the cost of water and the cost of heated water which may be heated (or cooled) using gas, oil, electricity, etc., will be inputted by an operator or the like). In the event it is a discharging hot water line, such cost could include a cost for the discharged water and a cost for the heat energy required to heat or cool the discharged water. In the event the water is not discharged, such cost might include a cost for the heat energy required to heat or cool the water. The Host Computer will then "Compute Water Use Bill For Apartment "N"" at 49 by combining all the appropriate costs for all the monitors in that unit. Whether the Host Computer combines the accumulated flow time for all the devices in apartment "N" before multiplying the total by a cost per unit of flow time or proceeds as above is a matter of choice, with the latter providing greater flexibility to set different costs per unit of flow time for different devices.

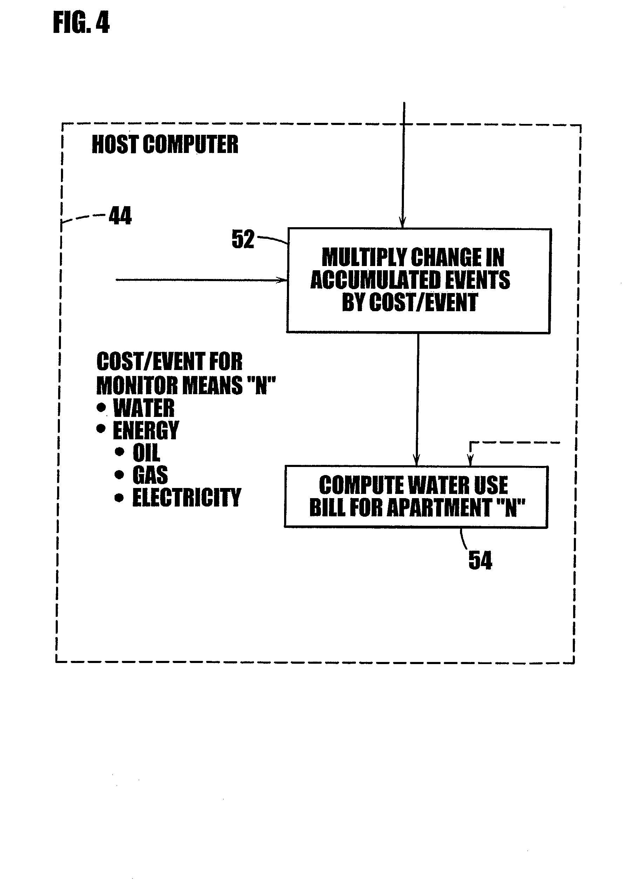

Figure 4 discloses an alternate embodiment. In this embodiment the Host Computer 44 will "Multiply Change In Accumulated Events By Cost/Event" at 52. The Cost/Event For Monitor Means "N", which may include a number of costs including the cost of water and the cost of heated water which may be heated (or cooled) using gas, oil, electricity, etc., will be inputted by an operator or the like. If Monitor Means "N" monitors a discharging hot water line, such cost could include a cost for the discharged water and a cost for the heat energy required to heat or cool the discharged water. If Monitor Means "N" monitors a water line that is not discharging water, such cost might include a cost for the heat energy required to heat or cool the water. The Host Computer will "Compute Water Use Bill For Apartment "N"" at 54 based on the costs of water flowing through all of the monitors in a given apartment.

Each embodiment may be exclusively applied to an apartment unit or they could be mixed.

To recover heat energy (BTU) costs, the Host Computer can receive data from the Receiver/ Transmitter 42 (Figure 3) and "Multiply Change In Accumulated Time For Monitor Means "N"" by BTU Cost Per Unit Of Flow Time at 60. The BTU Cost/Unit Of Flow Time For Monitor Means "N" could be input by the operator.

## Claims

1. A system for defining a cost for water usage in a unit of a multi unit building comprising
at least one water device such as a kitchen or bathroom sink, a tub or shower, a toilet or a heating/cooling device having at least one water supply pipe,
monitor means for determining the commencement of flow through a water supply pipe for said one water device, the conclusion of such flow and the flow time duration thereof,
means for accumulating the flow time durations for said monitor means, and
processor means for multiplying the flow time durations accumulated in a predetermined time period for said monitor means by a defined water cost per unit of flow time duration for that water pipe to compute a water cost.

2. A system for defining a cost for water usage in a unit of a multi unit building according to claim 1, wherein the defined water cost includes an energy cost per unit of flow time duration.

3. A system for defining a cost for water usage in a unit of a multi unit building according to claim 1, wherein the water device discharges water and the defined water cost includes a cost of water per unit of flow time duration.

4. A system for defining a cost for water usage in a unit of a multi unit building comprising
at least one water device such as a kitchen or bathroom sink, a tub or shower, a toilet or a heating/cooling device having at least one water supply pipe in the unit,
monitor means for determining the commencement of flow through a water supply pipe for said one water device and the conclusion of such flow indicating the conclusion of a flow event,
means for accumulating the flow events for said monitor means, and
processor means for multiplying the flow events accumulated in a predetermined time period for said monitor means by a defined water cost per flow event for said monitor means to compute a water cost for said monitor means.

5. A system for defining a cost for water usage in a unit of a multi unit building according to claim 4, wherein the defined water cost includes an energy cost per flow event.

6. A system for defining a cost for water usage in a unit of a multi unit building according to claim 4, wherein the water device discharges water and the defined water cost includes a cost of water per flow event.
